# EUROPEAN PATENT SPECIFICATION

(11) **EP 3 500 111 B1**
(45) Date of publication and mention of the grant of the patent: **29.09.2021**
(21) Application number: 16763961.6
(22) Date of filing: 17.08.2016
(51) Int. Cl.: A23L 7/10, B02B 1/00, A23L 7/196, A23P 30/00

(54) **RAW GRAIN FORTIFICATION PROCESS**
ROHKORNANREICHERUNGSVERFAHREN
PROCÉDÉ D'ENRICHISSEMENT DE CÉRÉALES BRUTES

(43) Date of publication of application: 26.06.2019
(73) Proprietor: Fortigrains Pvt. Ltd., Singapore 188972 (SG)
(72) Inventor: Gunawardana, Manju S., Bangalawatta Kottawa (LK); Seneviratne, R. A. C. Haily, Lunuwila (LK); Hettiarachchy, Ariyawansa, Pita Kotte CO 10100 (LK)
(74) Representative: Conti, Marco
(86) International application number: PCT/IB2016/054917
(87) International publication number: WO 2018/033774

(56) References cited:
- GB-A- 831 258
- GB-A- 1 265 386
- GB-A- 1 466 479
- US-A- 2 358 250
- US-A- 2 555 235
- US-A1- 2005 147 731

## Description

### FIELD OF THE DISCLOSURE

The invention relates to a grain fortification process. More specifically, the present invention discloses a novel fortification technique along with various controlled ambient environment conditions that help in fortification of raw food grains.

### BACKGROUND OF THE DISCLOSURE

A number of nutritional deficiencies are reported to be critical amongst many segments of people, especially in developing countries around the globe. One such critical condition is the micro nutrients deficiency of essential vitamins and minerals such as iron, zinc, selenium, folic acid, vitamins, amino acids etc., which has been named as the "hidden hunger". The most prevalent micronutrients among them are iron, zinc, iodine and vitamin A. Therefore, the best way of eliminating these deficiencies is to improve the nutritional quality of foods which are frequently consumed. To address this need food fortification has been practiced for quite some time.

The process of addition of minerals and vitamins described above, to grains and other foods to reduce nutritional deficiencies is termed Fortification. The nutrients regularly used in grain fortification prevent diseases, strengthen immune systems, and improve productivity and cognitive development. In practice, the selection of a food for micronutrient fortification is governed by a range of technological and regulatory factors. Foods including cereals, oils, dairy products, beverages and various condiments such as salt, sauces (e.g. soy sauce) and sugar are particularly well suited to mandatory mass fortification. Example of food fortification processes are disclosed in patent documents US2358250A, GB831258A, US2555235A.

Seeing that rice is consumed by people all around the world, especially in Asian and African Continents, various methods have been developed for fortifying rice. Hot extrusion, cold extrusion, coating and dusting are the currently practiced fortification methods for rice, but they have several drawbacks, and they are not very popular among people around the world. Due to washing rice before cooking, at the time of consumption, the fortificant is not available as expected. This is one of the reasons for not using any of these methods on a large scale. Also upon fortification, there is a discoloration problem with them which leads consumer unacceptability. Besides, unnecessary cost has to be spent on the binding chemicals, like waxes and gums, used in conventional fortification processes, which raise up the production cost too.

Although fortified extruded pellets (rice kernels) is one of the preferred technologies, it has shown to be unstable during storage, have a higher cost and lower consumer acceptability. The most unsatisfactory feature of fortification by this method is the inability to guarantee equal distribution of fortificants amongst natural grains when mixed in ratios such as 1 in 100 or 1 in 200 etc, as the case maybe. Further, it is expensive as it needs extruders, steamers and dryers of which the capital cost and also the running cost of production is high.

Therefore, a process is highly required that overcomes the above mentioned disadvantages and provides an easy to operate and a cost effective method for enrichment of grains.

### SUMMARY

Aspects of the invention are thus directed to a grain fortification process that provides a fortification method of raw food grains, especially paddy. The said process is both cost effective and overcomes the existing problems by providing high quality fortified grain.

A grain fortification system is also described. The said system has a plurality of fortification tanks each containing at least one fortifying solution. The system has a homogenizer adapted to receive fortifying solution from the plurality of fortification tanks to produce homogenized fortification solution.

In an aspect, the produced homogenized fortification solution is transferred to a fortification reactor in a predetermined quantity, wherein the said predetermined quantity is dependent on the type of raw food grain to be fortified. The fortification reactor is operated under preset degassing conditions followed by predefined controlled ambient adsorption conditions to produce fortified grains.

More specifically, the reactor is adapted to receive a predetermined quantity of the said homogenized fortification solution from the homogenizer, and receive a predetermined quantity of a raw food grains, and cause the said homogenized fortification solution and the said food grains to produce fortified grains by physicochemical reaction. The fortification is done by degassing the raw food grains at a preset degassing condition, to facilitate accelerated movements of fortificants inside the grain structure, and adsorbing the said homogenized fortification solution on the degassed raw food grains to produce the fortified grains under a controlled ambient environment conditions.

In one aspect, the degassing at the predefined controlled ambient degassing condition is carried out by heating the loaded raw food grain to a temperature of 40-50 °C for about 10 to 20 minutes. In another embodiment, the degassing is carried out a temperature below 55 °C. In an embodiment, the degassing is carried out in vacuum conditions, particularly, a vacuum of 0.1 bar abs to 0.99 bar abs is created inside the said fortification reactor.

In one aspect, the said adsorbing of the said homogenized fortification solution on the degassed raw food grains in predefined controlled ambient adsorption conditions which includes preheated fortifying solution is added in the said fortification reactor at about 55°C to 66°C, while maintaining the reactor temperature between room temperature to just less than gelatinization temperature of the grain, and soaking the raw food grains inside the fortification reactor for a time period in the range any time upto 360 minutes.

The raw food grains are fortified with homogenized fortification solution of molecular size less than 2 nanometers (nm) in diameter. More specifically, the homogenized fortification solution of molecular size less than 2 nm in diameter fill the micro pores of the raw food grains. The homogenized fortification solution of molecular size 2 - 5 nm in diameter fill the meso pores of the raw food grains.

The fortification reactor is loaded with raw food grains is first fed homogenized fortification solution of molecular size less than 2 nm followed by homogenized fortification solution of molecular size 2 - 5 nm in diameter, thus ensuring maximum loading of the grain with fortificants.

The food grains so fortified are then extracted and dried, and leftover fortification solution, if any, in the fortification reactor is transferred to fortification solution collection tank. The fortification solution collection tank supplies this leftover fortification solution back to the homogenizer for reuse. This improves the efficiency of the system.

According to the present invention, a grain fortification process is disclosed. The process starts with feeding raw food grains in a fortification reactor. Further, the grain fortification process comprises degassing raw food grains by subjecting the said fortification reactor to a preset degassing condition. In one aspect, degassing at the predefined controlled ambient degassing condition is carried out by heating the loaded raw food grain to a temperature of 40-50°C for about 10 to 20 minutes. In an embodiment, the degassing is carried out in vacuum conditions, particularly, a vacuum of 0.1 bar abs to 0.99 bar abs is created inside the said fortification reactor.

The process then is followed by adding of homogenized fortification solution in the fortification reactor, so that the fortificants could be adsorbed by the degassed grains.

The process of adsorbing of the said homogenized fortification solution on the degassed raw food grains in predefined controlled ambient adsorption conditions comprises adding preheated fortifying solution in the said fortification reactor at about 55°C to 66°C, while maintaining the reactor temperature between room temperature to just less than gelatinization temperature of the grain. The process further comprises soaking the paddy inside the fortification reactor for about any time upto 360 minutes.

According to the present invention, the grain fortification method during adsorption fills the micro pores of the grains with homogenized fortification solution of molecular size less than 2 nm in diameter followed by filling of meso pores of the grains with homogenized fortification solution of molecular size 2 - 5 nm in diameter, thus ensuring maximum loading of the grain with fortificants.

In another embodiment of the present invention, the homogenized fortification solution to be added in the fortification reactor is dependent on the type of raw food grain to be fortified.

Therefore, the present invention provides a grain fortification process that has a lower production cost of the fortified grain.

With the process of the present invention, fortified grains that do not lose a significant amount of their nutritional value (fortificants) on washing are provided.

It is further an object of the present invention to provide a grain fortification method that fills the micro pores of the grains followed by filling the meso pores of the grain in order to produce fortified grain better than those produced by existing processes in terms of quality.

It is yet another object of the present invention to fortify grains with temperature specific fortificants i.e. the absorption of homogenized fortificants takes place at a temperature less than 70°C.

There is also provided a fortified grain that can be cooked via conventional cooking process.

There is also provided a fortified grain that has adsorbed fortificants, and is sealed with an outer gelatinized layer, when producing parboiled rice.

This together with the other aspects of the present invention along with the various features of novelty that characterized the present disclosure is pointed out with particularity in claims annexed hereto and forms a part of the present invention. For better understanding of the present disclosure, its operating advantages, and the specified objective attained by its uses, reference should be made to the accompanying descriptive matter in which there are illustrated exemplary embodiments of the present invention.

### DESCRIPTION OF THE DRAWINGS

The advantages and features of the present invention will become better understood with reference to the following detailed description taken in conjunction with the accompanying drawings, in which:
Fig. 1 illustrates an exemplary block diagram representing raw grain fortification system.
Fig. 2 illustrates an exemplary process for producing fortified grains, according to various embodiments of the present invention.
Fig. 3 illustrates an exemplary diagram showing pores of a grain and fortification thereof, according to various embodiments of the present invention.
Fig. 4 illustrates an exemplary method involving filling of micro and meso pores of the grains by the homogenized fortification solution, according to various embodiments of the present invention.
Figs. 5-8 explain the efficacy of the process for fortifying food grains (paddy) according to the present invention.

Like reference numerals refer to like parts throughout the description of several views of the drawing.

### DESCRIPTION OF THE INVENTION

The exemplary embodiments described herein detail for illustrative purposes are subjected to many variations.

Unless otherwise specified, the terms, which are used in the specification and claims, have the meanings commonly used in the field of grain fortification system and method involved therein. Specifically, the following terms have the meanings indicated below.

The terms "a" and "an" herein do not denote a limitation of quantity, but rather denote the presence of at least one of the referenced item.

The terms "having", "comprising", "including", and variations thereof signify the presence of a component.

The term "grain" or "grains" refers here to seeds with or without attached hulls, including but not limited to, paddy, wheat, rye, legumes, maize, rice, oats, cornmeal, barley etc. or other cereal grains. Although, the present invention is explained with reference to taking paddy as the most appropriate grain which could be fortified by the said process.

The term "fortification solution" refers to solution comprising at least one of the essential nutrients, vitamins, minerals, and the like.

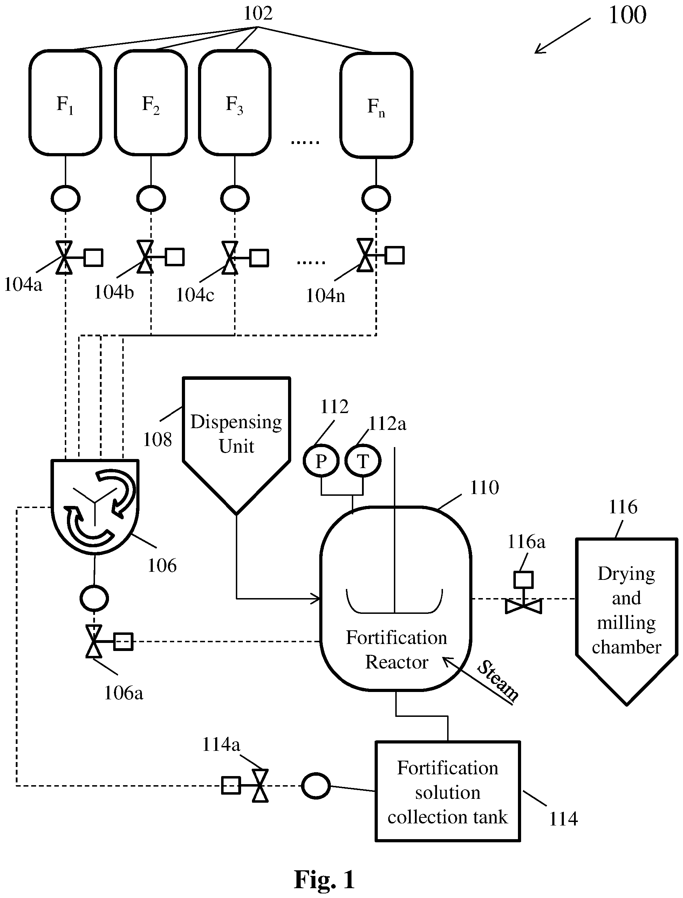

Fig. 1 illustrates an exemplary block diagram representing a grain fortification system 100. The system 100 includes a plurality of fortification tanks 102 each containing at least one fortifying solution. The fortifying solution from the plurality of fortification tanks 102 is allowed to flow into a homogenizer 106 to produce a homogenized fortification solution.

The said homogenized fortification solution is then fed into a fortification reactor 110 in a predetermined quantity. In one embodiment, the homogenized fortification solution is dependent on the type of raw food grain to be fortified. In an exemplary implementation, the ratio of raw food grain to homogenized fortification solution is in the range of 1:1 to 1:2.

The said fortification reactor 110 is adapted to receive raw food grains from a grain dispensing unit 108. The said fortification reactor works under predetermined degassing and predefined controlled ambient absorption conditions to produce fortified grains. The process will be explained in details later on in the specification.

The system 100 further includes a fortification solution collection tank 114 to collect leftover fortification solution from the fortification reactor after the fortified rice is produced. The fortification solution collection tank 114 is adapted to transport this leftover fortification solution to the homogenizer 106 for reuse. This enables the system 100 to achieve high degrees of efficiencies.

The fortification tanks 102 as represented by F₁, F₂, F₃......Fₙ each containing at least one unique fortifying solution. The fortifying solution is selected from the group consisting of a vitamin fortifying solution, a micronutrient fortifying solution, a macronutrient fortifying solution, a bio active functional compound solution, any other relevant molecules with aesthetic aspects (color, flavor and aroma), a protein fortifying solution, and/ or a phytochemical fortifying solution.

In an implementation, the fortification tanks 102 each contain more than one fortifying solutions in different concentrations. For example, the F₁ and F₂ contain only "Iron" and "Vitamin B" but F₃ contains both "Iron" as well as "Vitamin B" in different concentrations.

In an aspect, valves 104a, 104b, 104c....104n connected to the respective fortification tanks 102 are adapted to control the flow of the fortifying solution present therein. In an embodiment, the concentration of the fortifying solution in the homogenizer 106 is controlled by the valves 104a, 104b, 104c.....104n for the respective fortification tanks 102 as represented by F₁, F₂, F₃......Fₙ.

In several aspects, the concentration of the fortifying solution is controlled by the valves 104a, 104b, 104c....104n based on the grain type. For example, paddy grain is provided with only fortifying solution present in F₁ which is iron, or the paddy grain is provided with fortifying solution present in F₂ which is both iron and vitamin B. So the valves connected to respective tanks release the fortifying solution depending on the type of grain.

In an aspect, the fortification reactor 110 receives grains from the grain dispensing unit 108. The grain dispensing unit 108 stores grains that are to be fortified. In an exemplary implementation, cleaned paddy is stored in the grain dispensing unit 108. For example, the grain, such as paddy, is pre cleaned using conventional cleaning methods. In one aspect, the moisture of the paddy may be critically tested to ensure the moisture level to be below a certain limit, for example, moisture range between 13-15 % on wet basis. If the moisture level is above this value, the paddy may be dried by conventional engineering methods, such as blow drying etc.

The grains from the grain dispensing unit are fed in the fortification reactor 110 and then degassed. The process of degassing creates enough pore space within the food grain for which the fortificants are required to be admixed. For this purpose, the pressure pump 112 is used to create a negative pressure inside the grain fed fortification reactor 110. In one aspect, degassing at the predefined controlled ambient degassing condition is carried out by heating the loaded raw food grain (paddy) to a temperature of 40-50°C for about 10 to 20 minutes while maintaining the pressure to about 0.1 bar abs to 0.99 bar abs inside the said fortification reactor.

In an aspect, the fortification reactor 110 is heated to accelerate the degassing process. The temperature (heating and/ or cooling) is controlled by temperature controller 112a such as PID controller. Once the degassing is completed, the homogenized fortification solution formed in the homogenizer 106 is fed into the fortification reactor 110 containing degassed grains. In an exemplary implementation, the ratio of raw food grain to homogenized fortification solution is in the range of 1:1 to 1:2. The solution may be preheated separately before being introduced into the reactor 110.

In another aspect, having the homogenized fortification solution supplied into the fortification reactor 110 from the homogenizer 106, a steam supply is also turned on. The flow of steam supply is controlled with the help of feedback from temperature and pressure sensors (not shown) present within the fortification reactor 110.

In an exemplary implementation, the temperature sensors located within the fortification reactor 110 ensure that steam supply is regulated not to exceed the preset maximum temperature for the selected grain and the fortificant. In addition, the system 100 will also ensure that the temperature differential between the sensors is maintained at preset levels depending on the grain.

In another aspect, the pressure sensors connected inside the fortification reactor 110 will control the steam flow so as to ensure that the pressure within the fortification reactor 110 will be maintained at the selected set point within the range of 1.0 to 3.0 bar Abs by controlling the steam flow into the fortification reactor 110.

In an exemplary aspect, the mixture of degassed grains and homogenized fortification solution is kept under a temperature less than the gelatinisation temperature of the grain for anytime up to 360 minutes in the reactor core. This may lead to adsorption of the fortification solution on the surface of the grains. More specifically, the degassed paddy is kept with the homogenized fortification solution at a temperature between 55°C to 65°C for any time period upto 360 minutes depending on the type of fortificant used.

The fortification reactor 110 produces the fortified grains. In an implementation, along with fortified grains a leftover fortification solution is also produced.

In yet another aspect, the produced fortified grain is extracted from the fortification reactor 110 and transferred to a drying and milling chamber 116. The said drying and milling chamber 116 includes a drying unit 116a and a milling unit 116b separately placed. The said drying unit 116a is adapted to evaporate any remains of water content from the said fortified grains, and thus leaving the solid fortificants within the raw food grains. Thereafter, the said fortified and dried raw food grains are passed through the milling unit 116b and finally a nutrient rich fortified food grain is obtained.

In an aspect, the leftover fortification solution is collected in the fortification solution collection tank 114. The fortification solution collection tank 114 is adapted to collect, store and/ or recirculate homogenized fortification solution from and back to the homogenizer 106.

In an aspect, the fortification solution collection tank 114 stores the leftover fortification solution until the homogenizer 106 is required to produce homogenized fortification solution with the same required quality as that of the leftover fortification solution. This recirculation increases the overall efficiency of the process and system 100.

Furthermore, after the recovery of the fortified raw food grains, the said food grains may be steam cooked at about 90-100°C for about 3 to 20 minutes. The separated raw food grains may be dried for 6-18 hours and then may be milled and polished according to known in the art procedures.

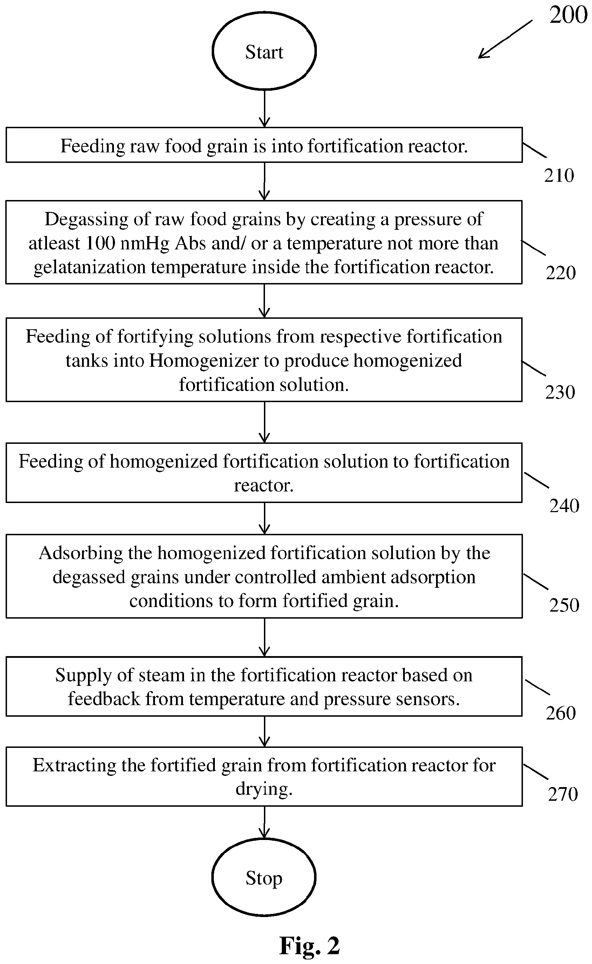

The novel process of the present invention is summarized in Fig. 2. As shown in Fig. 2, an exemplary grain fortification process 200 starts with step 210. At this step 210, raw food grains are fed into a fortification reactor. For example, paddy is fed in the fortification reactor during the step 210. The paddy may be pre-treated before dumping the fortification reactor.

The next step 220 involves degassing of raw food grains under predetermined degassing condition. The said degassing condition includes applying a negative pressure in the range of 0.1 to 0.99 bar abs to be created inside the fortification reactor to degas the paddy, and a temperature upto 50°C for upto 60 minutes. In one embodiment, the said controlled ambient degassing conditions further includes a temperature of not more than 55°C (for paddy) to be created inside the fortification reactor to speed up the process of degassing.

At step 230, the process includes feeding the fortifying solution in the homogenizer to produce homogenized fortification solution. The fortifying solution may be preheated, if required.

At step 240, the process involves feeding the produced homogenized fortification solution in the fortification reactor in a predetermined quantity based on the type of food grains which are required to be fortified.

The process 200 continues with step 250, wherein the degassed grains in the fortification reactor adsorbs the homogenized fortification solution fed from the homogenizer on the food grains to form fortified grain. In an aspect, the fortification reactor is treated under controlled ambient absorption conditions to carry out a controlled absorption mechanism. In one embodiment, adsorbing the said homogenized fortification solution on the degassed raw food grains in predefined controlled ambient adsorption conditions comprises creating a vacuum of 0.1 to 0.99 bar abs inside the said fortification reactor, and adding preheated fortifying solution in the said fortification reactor at a temperature less than the gelatinization temperature of the grain for anytime up to 360 minutes,.

In another embodiment of the present invention, at step 260 after having the homogenized fortification solution supplied into the fortification reactor from the homogenizer, a steam supply is also turned on. The flow of steam supply is controlled with the help of feedback from temperature and pressure sensors present within the fortification reactor. The steam is used to maintain the temperature of the reactor.

In an exemplary implementation, the temperature sensors located within the fortification reactor ensure that steam supply is regulated not to exceed the preset maximum temperature for the selected grain and the fortificant. In addition, the system will also ensure that the temperature differential between the sensors is maintained at preset levels depending on the grain.

In another exemplary embodiment, the pressure sensors connected inside the fortification reactor will control the steam flow so as to ensure that the pressure within the fortification reactor will be maintained at the selected set point within the range of 1.0 to 3.0 bar Abs by controlling the steam flow into the fortification reactor.

According to the present invention, the controlled ambient adsorption mechanism of step 250 includes that firstly the micro pores of the grains adsorb the homogenized fortification solution of molecule size less than 2 nm in diameter. Further, the said controlled ambient absorption mechanism includes that the meso pores of the grains adsorb the homogenized fortification solution of molecule size 2 - 5 nm in diameter.

According to the present invention, the homogenized fortification solution of molecular size less than 2 nm in diameter are adsorbed by the grains followed by the homogenized fortification solution of molecular size 2 - 5 nm in diameter. By employing this, the method 200 ensures that the micro pores of the grains are filled before the meso pores since absorption of the homogenized fortification solution of molecular size 2 -5 nm in diameter could block the way for the homogenized fortification solution of molecular size less than 2 nm in diameter.

For example, considering paddy as the raw food grain, first the degassed paddy is treated with mineral fortifying solution containing iron and zinc, later the paddy is treated with vitamins such as vitamin A, B 1, B3, B6, B12, folate etc. In another aspect, the paddy treated initially with minerals and vitamins is treated with phytochemicals such as cinnamon, rosemary etc. to add flavour.

The fortified grain from previous step is extracted in step 270 and dried. The method 200 ends thereafter. For example, after the recovery of the fortified raw food grains, the said food grains may be steam cooked at about 90-100°C for a period upto 20 minutes. The separated raw food grains may be dried upto 24 hours and then may be milled and polished according to known in the art procedures.

In an embodiment of the present invention, the fortification reactor produces fortified grain along with a leftover fortification solution. The leftover fortification solution is extracted from the fortification reactor and fed back into the homogenizer for reuse.

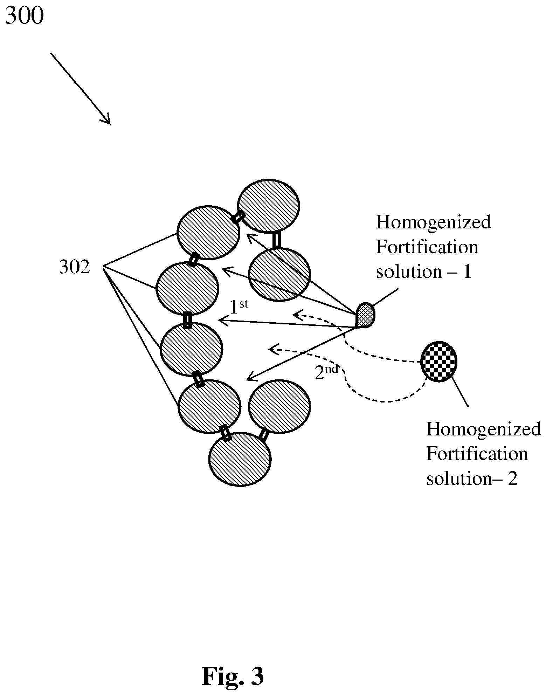

According to the present invention, Fig. 3 illustrates an exemplary diagram of pores of grain 300 and fortification thereto, adsorption process under controlled ambient absorption. The grain 300 has micro pores (less than 2 nm in diameter) and meso pores (2 - 5 nm in diameter). The molecular 302 structure of the grain 300 as illustrated in Fig. 3 depicts the pores therein.

According to the present invention, the homogenized fortification solution - 1 has molecular size less than 2 nm in diameter. The homogenized fortification solution - 1 includes, but not limited to, a mineral fortifying solution including, but not limited to, iron, zinc, chloride, calcium, phosphorous, magnesium, manganese, molybdenum, fluoride, iodine, selenium, copper and the like. The homogenized fortification solution - 1 is adsorbed by micro pores of the grain 300. The homogenized fortification solution - 2 has molecular size 2 - 5 nm in diameter. The homogenized fortification solution - 2 includes, but not limited to, a vitamin fortifying solution including, but not limiting to, Vitamin A, B1, B2, B3, B5, B6, B 12, D, E, K, Choline, folate and the like. The homogenized fortification solution - 2 is adsorbed by meso pores of the grain 300.

According to the invention, the homogenized fortification solution - 1 is adsorbed before the homogenized fortification solution - 2. This prevents the larger molecular sized homogenized fortification solution - 2 from blocking the way of smaller molecular sized homogenized fortification solution - 1.

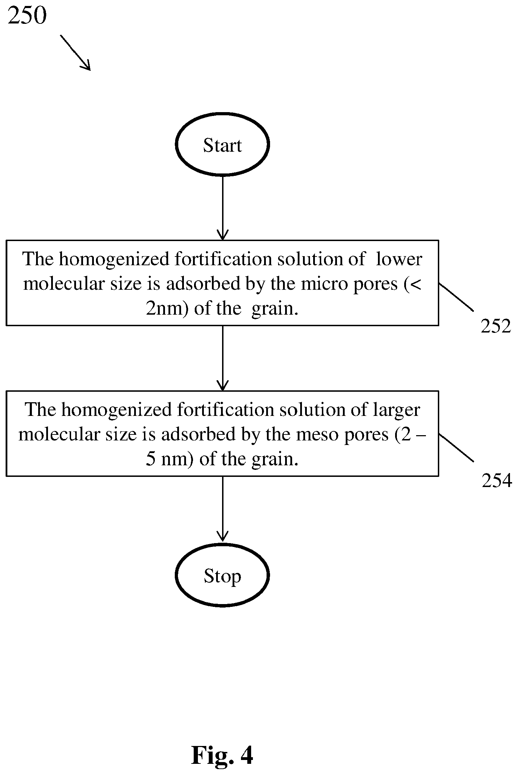

According to the present invention, Fig. 4 illustrates an exemplary process 250 of absorption of homogenized fortification solution under controlled ambient absorption conditions by filling of micro and meso pores of the grains. This process 250 is an exemplary elaboration of the step 250 of Fig. 2.

According to the present invention, the grain has micro as well as meso pores in its molecular structure. Therefore, more effective way to fortify a grain is to fortify it with homogenized fortification solution that can fill up the micro as well as meso pores of the grain.

At step 252 of the method 250, the homogenized fortification solution of lower molecular size is adsorbed by the micro pores (< 2nm) of the grain. The homogenized fortification solution of lower molecular size includes, but not limited to, a mineral fortifying solution such as iron, zinc, chloride, calcium, phosphorous, magnesium, manganese, molybdenum, fluoride, iodine, selenium, copper and the like.

At step 254, the homogenized fortification solution of larger molecular size is adsorbed by the meso pores (2 - 5 nm) of the grain. The homogenized fortification solution of larger molecular size includes, but not limited to, a vitamin fortifying solution such as Vitamin A, B1, B2, B3, B5, B6, B12, D, E, K, Choline, folate and the like.

According to the invention, the homogenized fortification solution of smaller molecular size is adsorbed before the homogenized fortification solution of larger molecular size.

Consequently, the homogenized fortification solution of lower molecular size is fed in the fortification reactor before the homogenized fortification solution of larger molecular size.

According another embodiment of the present invention, phytochemical fortifying solution is fed in the fortification reactor with the grains to add flavour. The phytochemical fortifying solution includes elements including, but not limited to, Indoles, Lycopene, Sylimarin, Ellagic acid, Flavonoids, Phthalides, Sulfaforaphane, Glucosinolates, Isothiocyanates, Thiocyanates, Thiols, Glycyrrhizin, Polyacetylenes, Gingerols, Flavonoids, Monoterpenes, Carotenoids, Monoterpenes, Allylil sulphides, Curcumin, Cinnamaldehide, Catechins, Rosmarinic acid, Coumestans, Resveratrol, Lignans, Phytic acid, Saponins, and the like.

As an example, the system and grain fortification process is disclosed with respect to paddy as the raw food grain. Many existing fortification processes disclose methods of rice fortification. While the existing processes achieve their objective of fortification, what is imperative is that fact that the rice grain losses valuable material into the surroundings due to dissolution or breakdown of particles. Therefore, the treatment of paddy would result in a fortified grain without harming the kernel of the grain (i.e. rice).

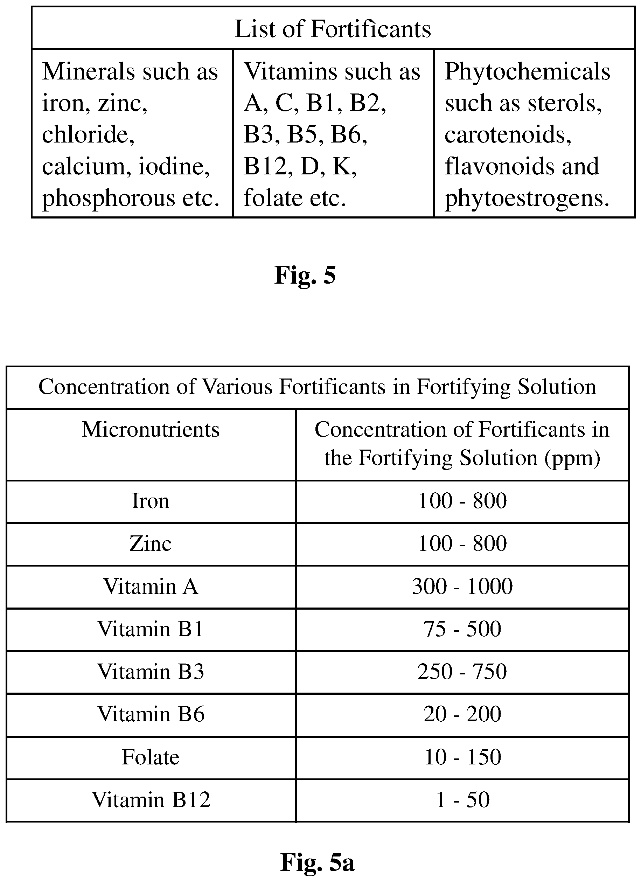

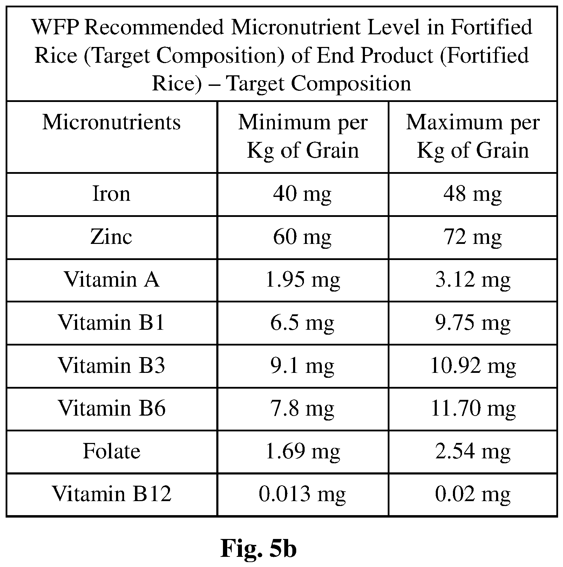

As illustrated in Fig 5, there is shown an exemplary list of fortificants for fortifying the food grains. Fig. 5a shows concentration of various fortificants in a sample fortifying solution used in the inventive process of the present invention.

Fig. 5b illustrates the World Food Program (WFP) recommended micronutrient levels in fortified rice for human consumption. This is the target composition to be achieved by the inventive process of the present invention.

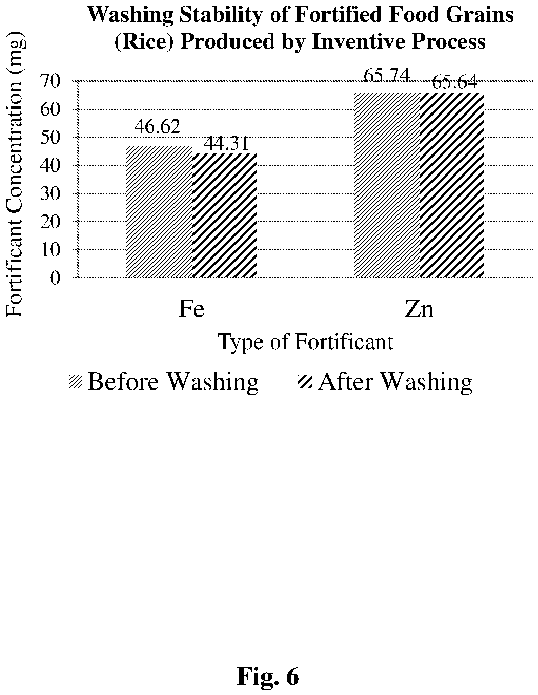

Fig. 6 shows the concentration of Fe and Zn content of the fortified rice produced by the present invention before and after washing. This shows that the fortified paddy produced does not lose the fortificants after washing.

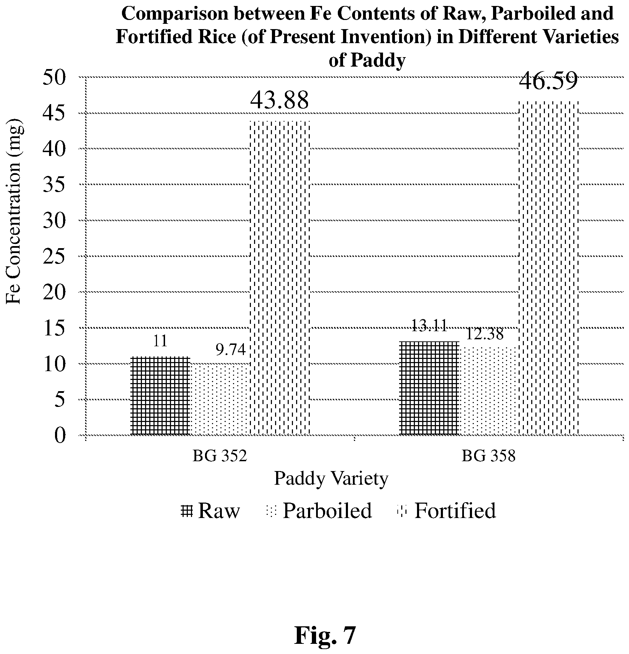

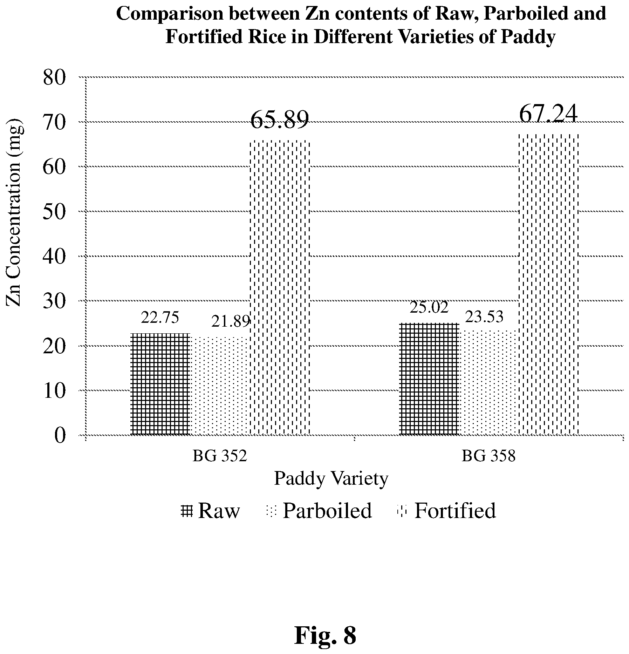

Figs. 7 and 8 show a comparison of Fe and Zn content in raw rice (2 varieties) and parboiled rice as compared to the fortified rice produced by the inventive process disclosed. This clearly establishes that the rice so produced is higher in fortificants (minerals and vitamins) than the raw rice and paraboiled rice.

Therefore, the present invention is a grain fortification process that is feasible, sustainable, effective and efficient. As compared to existing processes such as dusting and coating used to fortify rice, the present invention is more practical since washing is a common preliminary practice in rice cooking and high potion of fortificants are washed away with dusted and coated fortified rice products. Moreover, the present invention has the ability to guarantee equal distribution of fortificants amongst natural grains when mixed in different ratios.

Additionally, the present invention produces fortified grains without any issues of decolouration. In contrast, a well-known technology like extrusion wherein the fortificants are not washed away, is also the most expensive method in grain fortification.

Further, the present invention understands and takes the advantage different pores of the grain. Thereby, the fortificants/ nutrients are infused into the garin endosperm by present system and method, the washing/ abrasion losses are very low, which is a major problem with existing technologies involving dusted and coated grains.

Apart, from above mentioned advantages, the present invention does not involve an alien layer around kernel like that is in existing fortification processes such as dusting and coating.

The foregoing descriptions of specific embodiments of the present invention have been presented for purposes of description. They are not intended to be exhaustive or to limit the present invention to the precise forms disclosed, and obviously many modifications and variations are possible in light of the above teaching. The embodiments were chosen and described in order to best explain the principles of the present invention and its practical application, and to thereby enable others skilled in the art to best utilize the present invention and various embodiments with various modifications as are suited to the particular use contemplated.

## Claims

1. A grain fortification process comprising the steps of:
feeding raw food grains (300) into a fortification reactor (110);
degassing the said raw food grain (300) by subjecting the said fortification reactor (110) to a preset degassing condition;
adding a homogenized fortification solution in the said fortification reactor (110) via a homogenizer (106);
subjecting the said degassed raw food grains (300) to an adsorption process to produce a fortified food grain, wherein the said adsorption process comprises adsorption of the said homogenized fortification solution by the said degassed raw food grain inside the fortification reactor (110) under a predefined controlled ambient adsorption conditions; and
extracting the said fortified food grain from the said fortification reactor (110),
**characterized in that** said adsorption process comprises
filling micro pores of the raw food grains (300) by a homogenized fortification solution having molecular size of less than 2 nanometer (nm) in diameter, wherein said micro pores are less than 2 nm in diameter, and thereafter
filling meso pores of the raw food grains (300) by a homogenized fortification solution having molecular size of 2-5 nm in diameter, wherein said meso pores are 2-5 nm in diameter.

2. The process as claimed in claim 1, wherein degassing is carried out in vacuum or is carried out at a pressure between 0.1 to 0.99 bar abs.

3. The process as claimed in claim 2, wherein degassing at the predefined controlled ambient degassing condition is carried out by heating the loaded raw food grain to a temperature of less than 55 °C for upto 20 minutes.

4. The process as claimed in claim 1, wherein adsorbing the said homogenized fortification solution on the degassed raw food grains in predefined controlled ambient adsorption conditions comprises adding preheated fortifying solution in the said fortification reactor (110) at about a temperature less than the gelatinization temperature of the grain for anytime up to 360 minutes.

5. The process as claimed in claim 4, wherein the soaked food grain is steam dried at temperature between 90°C to 100°C for upto about 20 minutes.

6. The process as claimed in claim 1, wherein the at least one fortifying solution is selected from the group consisting of a vitamin fortifying solution, a miconutrient fortifying solution, a macronutrient fortifying solution, a bio active functional compound solution, a protein fortifying solution, and/ or a phytochemical fortifying solution.

## Patentansprüche

1. Kornanreicherungsverfahren, umfassend die Schritte:
Einspeisen von rohen Nahrungsmittelkörnern (300) in einen Anreicherungsreaktor (110);
Entgasen des rohen Nahrungsmittelkorns (300), indem der Anreicherungsreaktor (110) einem voreingestellten Entgasungszustand unterworfen wird;
Zugeben einer homogenisierten Anreicherungslösung in den Anreicherungsreaktor (110) über einen Homogenisator (106) ;
Unterziehen der entgasten rohen Nahrungsmittelkörner (300) einem Adsorptionsverfahren, um ein angereichertes Nahrungsmittelkorn herzustellen, wobei das Adsorptionsverfahren die Adsorption der homogenisierten Anreicherungslösung durch das entgaste rohe Nahrungsmittelkorn innerhalb des Anreicherungsreaktors (110) unter vordefinierten kontrollierten Umgebungsadsorptionsbedingungen umfasst; und
Extrahieren des angereicherten Nahrungsmittelkorns aus dem Anreicherungsreaktor (110),
**dadurch gekennzeichnet, dass** das Adsorptionsverfahren das Füllen von Mikroporen der rohen Nahrungsmittelkörner (300) mit einer homogenisierten Anreicherungslösung aufweisend eine Molekülgröße von weniger als 2 Nanometer (nm) im Durchmesser, wobei die Mikroporen einen Durchmesser von weniger als 2 nm aufweisen, und danach das Füllen der Mesa-Poren der rohen Nahrungsmittelkörner (300) durch eine homogenisierte Anreicherungslösung aufweisend eine Molekülgröße von 2 bis 5 nm im Durchmesser, wobei die Mesa-Poren einen Durchmesser von 2 bis 5 nm aufweisen, umfasst.

2. Verfahren nach Anspruch 1, **dadurch gekennzeichnet, dass** die Entgasung im Vakuum oder bei einem Druck zwischen 0,1 bis 0,99 bar abs durchgeführt wird.

3. Verfahren nach Anspruch 2, wobei das Entgasen bei den vordefinierten kontrollierten Umgebungsentgasungsbedingungen durch Erhitzen des beladenen rohen Nahrungsmittelkorns auf eine Temperatur von weniger als 55 °C für bis zu 20 Minuten durchgeführt wird.

4. Verfahren nach Anspruch 1, wobei das Adsorbieren der homogenisierten Anreicherungslösung an den entgasten rohen Nahrungsmittelkörnern unter vordefinierten kontrollierten Umgebungsadsorptionsbedingungen die Zugabe von vorgewärmter Anreicherungslösung in den Anreicherungsreaktor (110) bei etwa einer Temperatur von weniger als der Gelatinierungstemperatur des Korns für eine beliebige Zeit bis zu 360 Minuten umfasst.

5. Verfahren nach Anspruch 4, wobei das eingeweichte Nahrungsmittelkorn bei einer Temperatur zwischen 90 °C und 100 °C bis zu etwa 20 Minuten lang dampfgetrocknet wird.

6. Verfahren nach Anspruch 1, wobei die mindestens eine Anreicherungslösung aus der Gruppe bestehend aus einer Vitamin-Anreicherungslösung, einer Mikronährstoff-Anreicherungslösung, einer Makronährstoff-Anreicherungslösung, einer Lösung einer bioaktiven funktionellen Verbindung, einer Protein-Anreicherungslösung und/oder einer phytochemischen Anreicherungslösung ausgewählt ist.

## Revendications

1. Procédé d'enrichissement de céréales comprenant les étapes de :
alimenter des céréales alimentaires brutes (300) dans un réacteur d'enrichissement (110) ;
dégazer ladite céréale alimentaire brute (300) en soumettant ledit réacteur d'enrichissement (110) à une condition de dégazage prédéfinie ;
ajouter une solution d'enrichissement homogénéisée dans ledit réacteur d'enrichissement (110) via un homogénéisateur (106) ;
soumettre lesdites céréales alimentaires brutes dégazées (300) à un processus d'adsorption pour produire une céréale alimentaire enrichie, dans lequel ledit processus d'adsorption comprend l'adsorption de ladite solution d'enrichissement homogénéisée par ladite céréale alimentaire brute dégazée à l'intérieur du réacteur d'enrichissement (110) dans des conditions d'adsorption ambiantes contrôlées prédéfinies ; et
extraire ladite céréale alimentaire enrichie dudit réacteur d'enrichissement (110),
**caractérisé en ce que** ledit procédé d'adsorption comprend le remplissage des micropores des céréales alimentaires brutes (300) par une solution d'enrichissement homogénéisée ayant une taille moléculaire inférieure à 2 nanomètres (nm) de diamètre, dans lequel lesdits micropores ont un diamètre inférieur à 2 nm, et ensuite le remplissage des mésapores des céréales alimentaires brutes (300) par une solution d'enrichissement homogénéisée ayant une taille moléculaire de 2-5 nm de diamètre, dans lequel lesdits mésapores ont un diamètre de 2-5 nm.

2. Procédé selon la revendication 1, dans lequel le dégazage est effectué sous vide ou est effectué à une pression comprise entre 0,1 et 0,99 bar abs.

3. Procédé selon la revendication 2, dans lequel le dégazage à l'état de dégazage ambiant contrôlé prédéfini est réalisé en chauffant la céréale alimentaire brute chargée à une température inférieure à 55 °C pendant une durée maximale de 20 minutes.

4. Procédé selon la revendication 1, dans lequel l'adsorption de ladite solution d'enrichissement homogénéisée sur les céréales alimentaires brutes dégazées dans des conditions d'adsorption ambiantes contrôlées prédéfinies comprend l'ajout de la solution d'enrichissement préchauffée dans ledit réacteur d'enrichissement (110) à environ une température inférieure à la température de gélatinisation de la céréale pendant n'importe quelle durée allant jusqu'à 360 minutes.

5. Procédé selon la revendication 4, dans lequel la céréale alimentaire trempée est séchée à la vapeur à une température comprise entre 90 et 100 °C pendant un maximum d'environ 20 minutes.

6. Procédé selon la revendication 1, dans lequel l'au moins une solution enrichissante est choisie dans le groupe constitué d'une solution enrichissante de vitamines, d'une solution fortifiante de micronutriments, d'une solution fortifiante de macronutriments, d'une solution de composé fonctionnel bioactif, d'une solution fortifiante de protéines, et/ou d'une solution fortifiante phytochimique.
